# EUROPÄISCHE PATENTSCHRIFT

(11) **EP 0 936 359 B1**
(45) Veröffentlichungstag und Bekanntmachung des Hinweises auf die Patenterteilung: **04.12.2002**
(21) Anmeldenummer: 99102128.8
(22) Anmeldetag: 03.02.1999
(51) Int. Cl.: F16B 5/06, F16B 2/22

(54) **Halteeinrichtung für das Befestigen eines Gegenstandes an einem Draht**
Assembly for fastening an object to a rod
Dispositif de fixation d'un objet à un barreau

(30) Priorität: 10.02.1998 DE 19805292
(43) Veröffentlichungstag der Anmeldung: 18.08.1999
(73) Patentinhaber: WANZL METALLWARENFABRIK GMBH, D-89336 Leipheim (DE)
(72) Erfinder: Pech, Raimund, 89312 Günzburg (DE)

(56) Entgegenhaltungen:
- DE-U- 7 615 839
- GB-A- 1 191 102
- US-A- 4 622 725

## Beschreibung

Die Erfindung betrifft eine Halteeinrichtung für das Befestigen eines Gegenstandes an einem Draht mit rundem Querschnitt, wobei die Halteeinrichtung durch ein Halteelement und durch ein mit dem Halteelement zusammenwirkendes Sicherungsteil gebildet ist und das Halteelement zum Anformen oder zum lösbaren Befestigen am Gegenstand bestimmt ist und wobei das Halteelement einen geschlitzten Schaft und eine am Schaft befindliche hinterschnittene Nut zur Aufnahme des Drahtes aufweist und die Nut quer zur Längsachse des Schaftes angeordnet ist.

Es ist bekannt, beispielsweise an aus Gitterstäben bestehenden Körben von Einkaufswagen Teile wie Plakatrahmen, Halter, kleine Körbe usw. anzubringen, die beim Einkaufen von Vorteil sind. Als weniger vorteilhaft hingegen erweisen sich die bisher bekannten Befestigungsmittel, die zum Befestigen der oben genannten Gegenstände an Draht- oder Gitterstäben erforderlich sind. Flachstahlstücke als Gegenhalter, Nieten, Hülsen, Schrauben, Muttern usw., um nur einige zu nennen, sind notwendig, um die Gegenstände sichern zu können. Diese Mittel sind teuer und das Befestigen der Gegenstände erweist sich als umständlich.

Die GB-A-1,191,102 beschreibt eine Halteeinrichtung für dünne Rohre, Stäbe, Kabel und dergleichen. Diese Halteeinrichtung besteht aus einem Halteelement und aus einem mit dem Halteelement rastschlüssig zusammenwirkenden Sicherungsteil. Die Rohre, Stäbe oder Kabel werden vom Halteelement in einer Vertiefung aufgenommen. Durch anschließendes Verrasten des Sicherungsteiles mit dem Halteelement wird der von der Halteeinrichtung aufgenommene Gegenstand in seiner Lage fixiert. Die vorgeschlagene Halteeinrichtung dient dazu, möglichst mit einer weiteren gleichen Halteeinrichtung einen Gegenstand in einer ausgewählten Position zu halten, wobei jede Halteeinrichtung an einem Untergrund anschraubbar ist. Mit dieser Halteeinrichtung ist es nicht möglich, einen Gegenstand an einem Draht mit rundem Querschnitt zu befestigen.

Gleiches gilt auch für eine Abstandschelle, die in der DE 76 15 839 U1 beschrieben ist. Diese Abstandschelle dient zusammen mit weiteren Schellen der gleichen Art zur Verlegung von Kabeln oder Rohren an Wänden, mit einem an der Wand befestigbaren Schellensockel und einer auf den Schellensockel aufsetzbaren Schellenkappe, die zusammengesetzt einen geschlossenen Hohlraum zur Aufnahme des Kabels oder des Rohres bilden.

Ausgehend von diesem Stand der Technik besteht die Aufgabe der Erfindung darin, eine Halteeinrichtung der hier vorliegenden Art so weiterzuentwickeln, dass diese eine äußerst sichere Befestigung eines Gegenstandes an wenigstens einem Draht erlaubt.

Die Lösung der Aufgabe besteht darin, dass der Schaft einen zylindrischen Querschnitt sowie eine ringabschnittförmige Nut aufweist, dass das Sicherungsteil als ein kappenförmiges Teil gestaltet ist, das zwei Einschnitte aufweist, die zur Aufnahme des Drahtes vorgesehen sind und dass an der Innenwand des Sicherungsteiles wenigstens ein Wulst angeordnet ist, der zum Einschnappen in die ringabschnittförmige Nut bestimmt ist.

Der Vorteil der vorgeschlagenen Lösung besteht darin, dass es durch die beiden Einschnitte, die sich am Sicherungsteil befinden und die den Draht aufnehmen möglich ist, das Sicherungsteil so weit auf das Halteelement aufzustecken, dass der wenigstens eine Wulst in der ringabschnittförmigen Nut noch einrasten kann, obwohl der Schaft des Halteelementes, wie aus den nachfolgenden Zeichnungen ersichtlich ist, nur knapp über den Draht vorsteht. Die neue Halteeinrichtung baut also nicht groß auf, sie beansprucht wenig Raum und erlaubt trotzdem eine äußerst sichere Befestigung eines Gegenstandes an einem Draht. Die Erfindung erlaubt ferner in vorteilhafter Weise, dass ein mit wenigstens einem Halteelement ausgestatteter Gegenstand mit einem einzigen Handgriff und ohne Zuhilfenahme irgendwelcher komplizierter Werkzeuge auf einfachste Weise auf einem Draht mit rundem Querschnitt aufgesetzt werden kann. Der Draht rastet dabei in die hinterschnittene Nut des wenigstens einen Halteelementes ein, wobei die Gefahr eines unbeabsichtigten Lösens des Gegenstandes durch die Verwendung von wenigstens einem, ebenfalls aus Kunststoff bestehenden Sicherungsteil ausreichend entgegengewirkt wird.

Die Erfindung wird anhand von Ausführungsbeispielen näher erläutert. Es zeigt
Fig. 1 einen Abschnitt eines Gegenstandes mit angeformtem Halteelement;
Fig. 2 ein als Einzelteil gestaltetes Halteelement;
Fig. 3 ein auf einem Draht aufgesetztes Halteelement mit Sicherungsteil.

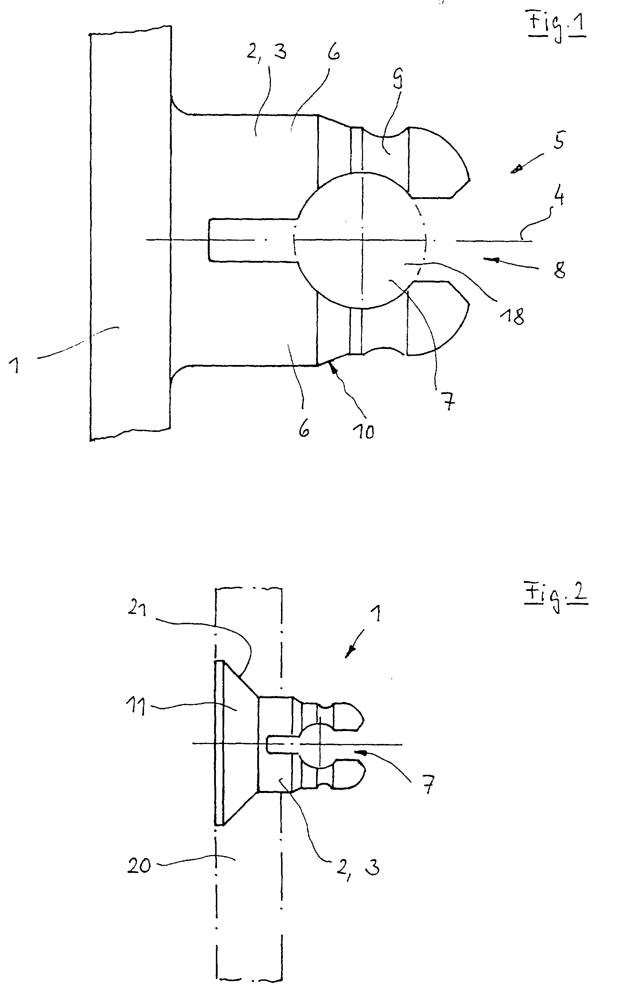

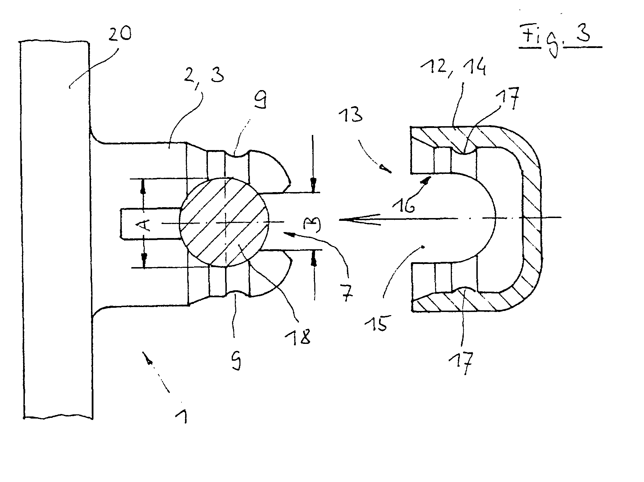

Fig. 1 zeigt einen Ausschnitt eines aus Kunststoff bestehenden Gegenstandes 20 an dem ein Halteelement 2 angeformt ist. Das Halteelement 2 weist einen Schaft 3 mit bevorzugt zylindrischem Querschnitt auf. Der Schaft 3 ist mit einer hinterschnittenen Nut 7 ausgestattet, die zur Aufnahme eines Drahtes 18 mit rundem Querschnitt bestimmt ist. Die Nut 7 ist quer zur Längsachse 4 des Schaftes 3 angeordnet. Entlang der Längsachse 4 ist der Schaft 3 geschlitzt, so daß zwei Schaftabschnitte 6 entstehen, die dann zur Seite ausweichen, wenn in die Nut 7 ein Draht 18 eingefügt wird und dann wieder zurückfedern, wenn der Draht 18 seine endgültige Position erreicht hat, vgl. Fig.3. Der Schlitz 8 ist an der Stirnseite 5 des Schaftes 3 angeschrägt, was das Ansetzen an einen Draht 18 erleichtert. Auf Höhe der Nut 7 befindet sich am Umfang der Schaftabschnitte 6 eine rechtwinklig zur Längsachse 4 angeordnete ringabschnittförmige Nut 9, auf deren Bedeutung in der Beschreibung von Fig. 3 näher eingegangen wird. Nahe der Nut 9 ist am Umfang der Schaftabschnitte 6 eine Anfasung 10 vorgesehen, die zum Gegenstand 20 hin ansteigt. Die Stirnseite 5 des Schaftes 3 ist gerundet. Zwischen der Stirnseite 5 des Schaftes 3 und der Nut 7 ist der Schlitz 8 breiter ausgebildet als nach der Nut 7.

Fig. 2 zeigt eine als Einzelteil gestaltete Halteeinrichtung 1 in Form eines Halteelementes 2. Die Ausbildung des Schaftes 3 nebst Nut 7 usw. ist so wie in Fig. 1 beschrieben. Im Beispiel weist das Halteelement 2 einen Senkkopf 11 auf. Der Gegenstand 20 ist beispielsweise eine Platte, die eine Senkkopfbohrung 21 aufweist, in welche das Halteelement 2 formschlüssig so eingefügt ist, daß nur der vordere Teil des Schaftes 3, zusammen mit der Nut 7, außerhalb des Gegenstandes 20 liegt.

Fig. 3 zeigt einen in die Nut 7 des Halteelementes 2 eingeführten Draht 18. Der Draht 18 führt mit seiner Längserstreckung durch den Schaft 3 hindurch. In der Zeichnung blickt man auf die zylindrische Querschnittsfläche des Drahtes 18. Der Durchmesser A des Drahtes 18 und damit der Nut 7 ist größer als die Breite B des Schlitzes 8, so daß auch bei diesem Beispiel die hinterschnittene Form der Nut 7 sichtbar wird. Die Zeichnung zeigt ferner ein zylindrisches, kappenförmiges, aus Kunststoff bestehendes Sicherungsteil 12, das in Pfeilrichtung auf das Halteelement 2 aufsetzbar ist. Das Sicherungsteil 12 ist mit seiner Aufsetzöffnung 13 zum Halteelement 2 weisend dargestellt. An der zylindrischen Wand 14 des Sicherungsteiles 12 sind zwei spiegelbildlich angeordnete Einschnitte 15 vorgesehen, deren Breite und deren teilweise gekrümmter Umriß dem Durchmesser des Drahtes 18 angepaßt ist. Im auf das Halteelement 2 aufgesetzten Zustand nehmen die Einschnitte 15 den Draht 18 auf. Sie umfassen ihn teilweise. Die Innenwand 16 des Sicherungsteiles 12 ist der äußeren Form und dem Durchmesser des Schaftes 3 angepaßt. An der Innenwand 16 ist ein umlaufender, von den Einschnitten 15 unterbrochener Wulst 17 angeordnet, der dann in die ringabschnittförmige Nut 9 des Schaftes 3 einschnappt, wenn das Sicherungsteil 12 auf das Halteelement 2 aufgesetzt ist. Das Sicherungsteil 12 bietet einen zusätzlichen Schutz, um ein Lösen des Gegenstandes 20 vom Draht 18 bei starker Beanspruchung zu vermeiden. Das Halteelement 2 und das Sicherungsteil 12 bilden zusammen die Halteeinrichtung 1.

## Patentansprüche

1. Halteeinrichtung (1) für das Befestigen eines Gegenstandes (20) an einem Draht (18) mit rundem Querschnitt, wobei die Halteeinrichtung (1) durch ein Halteelement (2) und durch ein mit dem Halteelement (2) zusammenwirkenden Sicherungsteil (12) gebildet ist und das Halteelement (2) zum Anformen oder zum lösbaren Befestigen am Gegenstand (20) bestimmt ist und wobei das Halteelement (2) einen geschlitzten Schaft (3) und eine am Schaft (3) befindliche hinterschnittene Nut (7) zur Aufnahme des Drahtes (18) aufweist und die Nut (7) quer zur Längsachse (4) des Schaftes (3) angeordnet ist, **dadurch gekennzeichnet, dass** der Schaft (3) einen zylindrischen Querschnitt sowie eine ringabschnittförmige Nut (9) aufweist, dass das Sicherungsteil (12) als ein kappenförmiges Teil gestaltet ist, das zwei Einschnitte (15) aufweist, die zur Aufnahme des Drahtes (18) vorgesehen sind und dass an der Innenwand (16) des Sicherungsteiles (12) wenigstens ein Wulst (17) angeordnet ist, der zum Einschnappen in die ringabschnittförmige Nut (9) bestimmt ist.

2. Halteeinrichtung nach Anspruch 1, **dadurch gekennzeichnet, dass** die ringabschnittförmige Nut (9) rechtwinklig zur Längsachse (4) des Schaftes (3) angeordnet ist.

3. Halteeinrichtung nach Anspruch 1 oder 2, **dadurch gekennzeichnet, dass** der zwischen der Stirnseite (5) des Schaftes (3) und der Nut (7) befindliche Abschnitt des Schlitzes (8) breiter ist als der weitere nach der Nut (7) befindliche Abschnitt des Schlitzes (8).

4. Halteeinrichtung nach einem der Ansprüche 1 bis 3, **dadurch gekennzeichnet, dass** das Sicherungsteil (12) aus Kunststoff gefertigt ist.

## Claims

1. A fixing arrangement (1) for securing an object (20) to a wire (18) of circular cross-section, wherein the fixing arrangement (1) is formed by a fixing element (2) and by a securing part (12) which co-operates with the fixing element (2) and the fixing element (2) is intended to be moulded on the object (20) or detachably secured thereto and wherein the fixing element (2) has a split shaft (3) and an undercut channel (7), located in the shaft (3), to receive the wire (18) and the channel (7) is arranged transversely to the longitudinal axis (4) of the shaft (3), **characterised in that** the shaft (3) has a cylindrical cross-section as well as a groove (9) in the shape of a portion of a ring, **in that** the securing part (12) is fashioned as a cap-shaped part which has two recesses (15) provided to receive the wire (18), and **in that** at least one bulge (17) is arranged on the inside wall (16) of the securing part (12) and is intended to snap into the groove (9) in the shape of a portion of a ring.

2. A fixing arrangement according to Claim 1, **characterised in that** the groove (9) in the shape of a portion of a ring is arranged at right angles to the longitudinal axis (4) of the shaft (3).

3. A fixing arrangement according to Claim 1 or 2, **characterised in that** the portion, of the slot (8), located between the end face (5) of the shaft (3) and the channel (7) is wider than the other portion, of the slot (8), located after the channel (7).

4. A fixing arrangement according to any one of Claims 1 to 3, **characterised in that** the securing part (12) is manufactured from plastics material.

## Revendications

1. Dispositif d'arrêt (1) pour la fixation d'un objet (20) à un jonc métallique (18) de section transversale circulaire, ledit dispositif d'arrêt (1) étant formé par un élément de retenue (2) et par une pièce d'arrêt (12) coopérant avec ledit élément de retenue (2), l'élément de retenue (2) étant destiné à être ménagé d'un seul tenant avec l'objet (20), ou à être fixé amoviblement à ce dernier, ledit élément de retenue (2) comportant un fût fendu (3) et une rainure contre-dépouillée (7) située sur ledit fût (3), pour recevoir le jonc métallique (18), et ladite rainure (7) étant disposée transversalement par rapport à l'axe longitudinal (4) du fût (3), **caractérisé par le fait que** le fût (3) présente une section transversale cylindrique, ainsi qu'une saignée (9) en forme de segment annulaire ; **par le fait que** la pièce d'arrêt (12) se présente comme une pièce en forme de capuchon comprenant deux entailles (15) prévues pour recevoir le jonc métallique (18) ; et **par le fait qu'**au moins un bourrelet (17), situé sur la paroi intérieure (16) de la pièce d'arrêt (12), est destiné à s'encliqueter dans la saignée (9) configurée en segment annulaire.

2. Dispositif d'arrêt selon la revendication 1, **caractérisé par le fait que** la saignée (9), en forme de segment annulaire, est agencée perpendiculairement à l'axe longitudinal (4) du fût (3).

3. Dispositif d'arrêt selon la revendication 1 ou 2, **caractérisé par le fait que** la région de la fente (8), située entre la rainure (7) et la face extrême (5) du fût (3), est plus large que la région restante de ladite fente (8) qui est située après la rainure (7).

4. Dispositif d'arrêt selon l'une des revendications 1 à 3, **caractérisé par le fait que** la pièce d'arrêt (12) est fabriquée en matière plastique.
